# EUROPÄISCHE PATENTSCHRIFT

(11) **EP 2 969 643 B1**
(45) Veröffentlichungstag und Bekanntmachung des Hinweises auf die Patenterteilung: **27.07.2016**
(21) Anmeldenummer: 14777640.5
(22) Anmeldetag: 01.10.2014
(51) Int. Cl.: B60N 2/235

(54) **RASTBESCHLAG**
DETENT FITTING
FERRURE À CRAN D'ARRÊT

(30) Priorität: 04.10.2013 DE 102013111034; 18.12.2013 DE 102013226534
(43) Veröffentlichungstag der Anmeldung: 20.01.2016
(73) Patentinhaber: Component Engineering Services GmbH, 38518 Gifhorn (DE)
(72) Erfinder: WINKELHAKE, Bernd, 38518 Gifhorn (DE)
(74) Vertreter: Flügel Preissner Schober Seidel
(86) Internationale Anmeldenummer: PCT/EP2014/071043
(87) Internationale Veröffentlichungsnummer: WO 2015/049287

(56) Entgegenhaltungen:
- WO-A1-2008/130075
- DE-A1- 1 429 438
- FR-A1- 2 406 752
- US-A- 2 941 583

## Beschreibung

Die Erfindung betrifft einen Rastbeschlag, insbesondere für einen Sitz eines Kraftfahrzeugs.

Rastbeschläge kommen beispielsweise bei Kraftfahrzeugsitzen als Verstellelemente zum Einsatz. Die Rastbeschläge ermöglichen die Bewegung der Lehne in eine gewünschte Position. Es gibt dabei in der Regel einen Bereich, in dem die Lehne zum Anpassen an eine gewünschte Sitzposition bewegt werden kann, und einen oder mehrere Bereiche, die nur eine feste Lehnenposition erlauben. In diesen Positionen kann beispielsweise eine Ladefläche vergrößert werden. Rastbeschläge sind auch als Gelenkbeschläge, Beschläge oder Rastversteller bekannt.

DE 101 02 860 A1 offenbart einen Rastbeschlag für einen Kraftfahrzeugsitz mit wenigstens einem in radialer Richtung beweglich angeordneten Riegel.

Aus DE 20 2008 001 597 U1 ist ein Rastbeschlag bekannt, der eine Mehrzahl verschwenkbarer oder verschiebbarer Sperrsegmente aufweist. Die Sperrsegmente sind auf einer Mitnehmerplatte angeordnet und von außen an einen Zahnkranz heranführbar und verrastbar.

DE 20 2007 012 931 U1 offenbart einen Rastbeschlag mit einem innenverzahnten Beschlagteil, das relativ zu einem ersten Beschlagteil drehbar ist, und mit einem antreibbaren und um eine Achse drehbar gelagerten Exzenter, der in der Lage ist, Zahnsegmente oder Riegel in radialer Richtung zu bewegen und ein sogenanntes Spielausgleichselement zu verriegeln.

DE 10 2006 032 681 A1 zeigt einen Gelenkbeschlag mit einem Antriebsteil, das einen unrunden Antriebsbereich aufweist, mit einem innenverzahnten ersten Gelenkteil und einem zweiten Gelenkteil sowie mit Sperrarmen, die mit der Innenverzahnung zusammenwirken.

WO 00/06414 offenbart einen Rastbeschlag mit einem Gehäuse und einer Deckplatte, welche das Gehäuse umgibt. Die Deckplatte hat einen Außenring mit einer Mehrzahl von Zähnen. Drei Zahnarme sind in Umfangsrichtung einer Trägerplatte angeordnet und werden durch ein Antriebsteil betätigt, das durch eine Feder in Verriegelungsrichtung vorgespannt ist.

WO 2005/044617 A1 offenbart einen mit mindestens zwei Sperrarmen versehenen Gelenkbeschlag für ein Kraftfahrzeug.

EP 1 260 405 A1 offenbart einen Rastversteller, der drehbare Zahnhebel aufweist, die in eine abschnittsweise vorgesehene Innenverzahnung eingreifen können.

Aus DE 32 11 158 A1 ist ein Gelenkbeschlag für eine verstellbare Rückenlehne bekannt.

DE 10 2006 056 004 A1 beschreibt einen Gelenkbeschlag, der zwei spiegelbildliche Zahnhebelpaare aufweist.

Der in DE 11 2007 001 388 T5 offenbarte Rastversteller weist mehrere Zahnhebel, eine Betätigungsplatte und eine abschnittsweise vorgesehene Innenverzahnung auf.

EP 1 818 210 B1 offenbart eine Neigungsverstellvorrichtung für einen Fahrzeugsitz, welche verschiebbare Zahnhebel, eine Betätigungsplatte und abschnittsweise eine Innenverzahnung aufweist.

In WO 2008/130075 A1 ist ein Rastbeschlag beschrieben, der eine Deckplatte, die eine Innenverzahnung aufweist, und ein Trägerteil, das relativ zu der Deckplatte drehbar ist, umfasst. Zudem umfasst der Rastversteller mehrere Zahnhebel zum Herstellen einer formschlüssigen Verbindung zwischen Deckplatte und Trägerteil. Die Zahnhebel sind an dem Trägerteil schwenkbar/drehbar angeordnet. Ein einzelner Zahnhebel weist eine Rastnase auf. Die Deckplatte hat einen inneren Umfangsabschnitt unterhalb der Innenverzahnung, der in Richtung Zentrum der Deckplatte vorspringt und die Rastnase erfasst.

Der in DE 11 2009 000 118 T5 offenbarte Rastversteller umfasst eine Deckplatte, die eine Innenverzahnung aufweist, ein Trägerteil, das relativ zu der Deckplatte drehbar ist, und einen fixierten Steuerring. Weiter umfasst der Rastversteller vier Zahnhebel zum Herstellen einer formschlüssigen Verbindung zwischen Deckplatte und Trägerteil. Ein Zahnhebel weist eine Rastnase auf, die in den Steuerring eingreifen kann.

DE 14 29 438 A1 offenbart einen Fahrzeugsitz mit einer Verstelleinheit. Die Verstelleinheit weist einen ersten Quadranten und einen zweiten Quadranten auf. Der erste Quadrant ist an einem Rohrende mittels Nieten befestigt. Der zweite Quadrant ist an einem Rohr angeschweißt. Der zweite Quadrant umfasst bogenförmige Zahnstangen, die um den Rand angenietet oder angeschweißt sind. Der erste Quadrant und der zweite Quadrant sind um ein Niet schwenkbar angeordnet. Ferner weist die Verstelleinheit eine Sperrplatte auf, die um ein Niet drehbar gelagert ist und zwischen dem ersten Quadranten und dem zweiten Quadranten angeordnet ist.

FR 2 406 752 A1 offenbart eine Drehgelenkeinrichtung für die Armlehne eines Fahrzeugsitzes. Die Drehgelenkeinrichtung weist einen Klinkenring auf. Der Klinkenring umfasst Klinkenzähne, die in einem Abstand von etwa 8° angeordnet sind. Die Klinkenzähne haben bezüglich einer radialen Achse eine asymmetrische Ausgestaltung.

US 2 941 583 A offenbart einen Rastbeschlag, der einen ersten Sperrzahn und einen zweiten Sperrzahn aufweist. Der erste Sperrzahn hat eine erste Zahnflanke, die im Wesentlichen parallel zu einer radialen Achse verläuft, und eine zweite Zahnflanke, die unter einem Winkel a zu der ersten Zahnflanke verläuft. Der zweite Sperrzahn weist eine gekrümmte dritte Zahnflanke und eine gekrümmte vierte Zahnflanke auf.

DE 10 2007 027 341 A1 offenbart einen Rastversteller, der eine Deckplatte, die eine Innenverzahnung aufweist, ein Trägerteil, das relativ zu der Deckplatte drehbar ist, und einen fixierten Steuerring umfasst. Weiter umfasst der Rastversteller vier Zahnhebel, die an dem Trägerteil schwenkbar angeordnet sind. Der Zahnhebel weist eine Rastnase auf, die in den Steuerring eingreifen kann.

Die bekannten Rastbeschläge sind dazu ausgelegt, ein im Wesentlichen gleiches Rastmoment für beide Drehrichtungen aufzuweisen. Das Rastmoment ist das Drehmoment, das der Rastbeschlag zuverlässig aufnehmen kann, bevor eine Fehlfunktion, wie beispielsweise ein Durchrutschen oder sogar der Bruch des Rastbeschlages, auftreten kann. Bei den bekannten Rastbeschlägen werden auch komplexe Steuerkurven verwendet, um ein Durchrutschen des Rastbeschlages zu verhindern und eine zuverlässige Sperrfunktion zu gewährleisten.

Die Erfindung hat die Aufgabe, einen Rastbeschlag anzugeben, der in der einen Drehrichtung ein wesentlich größeres Rastmoment als in der anderen Drehrichtung aufweist.

Die Aufgabe wird durch einen Rastbeschlag gemäß Anspruch 1 gelöst. Vorteilhafte Weiterbildungen des Rastbeschlages sind in den Ansprüchen 2 bis 11 definiert.

Der Erfindung liegt die Erkenntnis zu Grunde, dass ein Rastbeschlag jedoch im Allgemeinen hauptsächlich in lediglich einer seiner beiden Drehrichtungen belastet wird. Der Rastbeschlag entsprechend der vorliegenden Erfindung ist insbesondere für einen Sitz eines Kraftfahrzeugs geeignet. Der Rastbeschlag umfasst eine Grundplatte, eine Deckplatte, eine Vielzahl an Sperrarmen und eine Betätigungsplatte. Die Deckplatte ist relativ zu der Grundplatte drehbar und weist eine Innenverzahnung auf. Der Sperrarm ist an der Grundplatte angeordnet und zwischen einer entriegelten Stellung, in der eine Drehung der Deckplatte relativ zu der Grundplatte möglich ist, und einer verriegelten Stellung, in der eine Drehung der Deckplatte relativ zu der Grundplatte blockiert ist, schwenkbar. Die Betätigungsplatte ist relativ zu der Grundplatte drehbar und ist geeignet, den Sperrarm zwischen der entriegelten Stellung und der verriegelten Stellung zu bewegen. Die Innenverzahnung weist erste Sperrzähne auf, die einen Scheitelpunkt haben und die bezüglich einer radialen Achse, die durch den Scheitelpunkt verläuft, asymmetrisch ausgebildet sind. Der Sperrarm weist zweite Sperrzähne auf, die geeignet sind, mit den ersten Sperrzähnen zu kämmen.

Die asymmetrisch ausgebildeten Sperrzähne führen dazu, dass das Rastmoment in der einen Drehrichtung größer ist als in der anderen Drehrichtung. Es müssen daher keine komplexen Steuerkurven vorgesehen werden, um ein Durchrutschen des Rastbeschlages zu verhindern. Derartige Sperrzähne ermöglichen ein Bewegen des Sperrarmes von der verriegelten Stellung in die entriegelte Stellung, auch wenn der Rastbeschlag belastet ist. Das Entriegeln kann dann gleichmäßig und ohne eine Stop-Rutsch-Bewegung erfolgen. Zudem erfüllen derartige Zähne eine Sicherheitsfunktion, da das Entriegeln auch nach einem Crash möglich ist.

Bei einer vorteilhaften Weiterbildung weisen die ersten Sperrzähne eine erste Zahnflanke auf, die im Wesentlichen parallel zu der radialen Achse verläuft. Bevorzugt weisen die ersten Sperrzähne eine zweite Zahnflanke auf, die unter einem spitzen Winkel zu der radialen Achse verläuft. Alternativ verläuft die zweite Zahnflanke gekrümmt. Die zweiten Sperrzähne können ebenso derartig weitergebildet sein. Das Rastmoment in die Hauptbelastungsrichtung kann dadurch weiter erhöht werden. Im Fall einer gekrümmten zweiten Zahnflanke kann zusätzlich das Bewegen der Sperrarme in die entriegelte Stellung erleichtert werden.

Erfindungsgemäß weist die Grundplatte wenigstens einen, vorzugsweise zylinderförmig ausgebildeten, Lagervorsprung auf, an dem der Sperrarm schwenkbar gelagert ist. Weiter vorzugsweise ist der Sperrarm nahezu spielfrei an dem Lagervorsprung gelagert.

Der Lagervorsprung verringert das Spiel des Sperrarmes und stabilisiert damit den Rastbeschlag in der verriegelten Stellung. Beispielsweise kann dadurch ein unbeabsichtigtes Bewegen des Sperrarmes aus der verriegelten Stellung aufgrund von Erschütterungen verhindert werden.

In einer vorteilhaften Ausgestaltung weist die Grundplatte wenigstens einen Stützvorsprung auf. Der Stützvorsprung hat vorzugsweise eine Stützfläche, die geeignet ist, den Sperrarm abzustützen. Weiter bevorzugt hat der Stützvorsprung eine erste Führungsfläche, die geeignet ist, einen Abschnitt des Sperrarmes, vorzugsweise nahezu spielfrei, zu führen. Weiter bevorzugt hat der Stützvorsprung eine zweite Führungsfläche, die geeignet ist, einen Abschnitt des Sperrarmes, vorzugsweise nahezu spielfrei, zu führen. Der Stützvorsprung stützt den Sperrarm in der entriegelten Stellung ab und kann ein Klemmen des Sperrarmes beispielsweise aufgrund von Erschütterungen verhindern. Das Spiel des Sperrarmes ist in der entriegelten Stellung geringer. Die erste und zweite Führungsfläche erlauben eine kontrollierte Bewegung des Sperrarmes. Das Spiel des Sperrarms ist während der Bewegung zwischen der entriegelten Stellung und der verriegelten Stellung geringer. Ein Klemmen des Sperrarmes wird daher auch während der Bewegung unwahrscheinlicher.

Es ist bevorzugt, dass der Sperrarm eine Lageröffnung, die an einem Endbereich des Sperrarms angeordnet ist, aufweist. Die Lageröffnung hat vorzugsweise einen Durchmesser zwischen 3 mm und 7 mm. Erfindungsgemäß weist der Sperrarm einen Sperrabschnitt auf, der vorzugsweise an einem ersten Bereich, vorzugsweise einer radial äußeren Fläche im Einbauzustand, und dem anderen Endbereich des Sperrarmes angeordnet ist. Der Sperrabschnitt hat vorzugsweise eine Länge in Umfangsrichtung zwischen 5 mm und 15 mm. Erfindungsgemäß weist der Sperrarm eine erste Steuerkurve, die einen ersten Entriegelungsbereich, einen ersten Verriegelungsbereich und einen ersten Stützbereich hat, auf. Die erste Steuerkurve wird vorzugsweise durch einen zweiten Bereich des Sperrarmes gebildet.

Erfindungsgemäß bildet die Betätigungsplatte eine zweite Steuerkurve, die geeignet ist, mit der ersten Steuerkurve zusammenzuwirken. Die zweite Steuerkurve hat einen zweiten Entriegelungsbereich, einen zweiten Verriegelungsbereich und einen zweiten Stützbereich.

Der Sperrarm kann durch die Lageröffnung nahezu spielfrei gelagert werden. Das ermöglicht ein zuverlässiges Eingreifen des Sperrarmes in die Innenverzahnung. Die Anordnung des Sperrabschnittes erlaubt eine bessere Verteilung der auf den Sperrarm wirkenden Kraft, so dass der Sperrarm gleichmäßiger belastet wird und folglich der Verschleiß abnimmt. Weiter kann das Rastmoment durch die Anpassung der Betätigungsplatte an die Sperrarme erhöht werden. Es ist auch möglich, dass die Bereiche der ersten Steuerkurve auf die entsprechenden Bereiche der zweiten Steuerkurve abgestimmt sind und sich beispielsweise zwei erste Stützbereiche jedoch voneinander unterscheiden. Die gilt ebenso für die übrigen Bereiche.

Erfindungsgemäß umfasst der Rastbeschlag zudem eine dritte Steuerkurve, die ein Bewegen des Sperrarmes von der entriegelten Stellung in die verriegelte Stellung steuert. Erfindungsgemäß wird die dritte Steuerkurve durch eine innere Umfangsfläche eines Steuerrings gebildet. Die dritte Steuerkurve ermöglicht es, ein Bewegen des Sperrarmes von der entriegelten Stellung in die verriegelte Stellung zu erlauben oder nicht zu erlauben. Es kann daher festgelegt werden, in welchen relativen Drehstellungen die Grundplatte und die Deckplatte gegeneinander verriegelt werden. Es ist bevorzugt, dass die dritte Steuerkurve eine abschnittsweise ausgebildete Verzahnung aufweist, die an einer äußeren Umfangsfläche des Steuerrings vorgesehen ist und die geeignet ist, die dritte Steuerkurve an der Deckplatte oder an der Grundplatte vorzugsweise kraftschlüssig zu fixieren. Erfindungsgemäß ist die dritte Steuerkurve nicht einteilig mit der Grundplatte oder der Deckplatte ausgebildet, sondern mittels der Verzahnung formschlüssig an der Deckplatte oder an der Grundplatte fixiert. Die Verzahnung erlaubt einen Austausch der dritten Steuerkurve, falls diese defekt ist, auch wenn der Rastbeschlag bereits beispielsweise an einem Kraftfahrzeugsitz verbaut ist. Obgleich eine derartige dritte Steuerkurve dadurch ein größeres Spiel im Vergleich zu einer einteilig ausgebildeten dritten Steuerkurve aufweist, kann dieser hinnehmbare Nachteil vermieden werden, wenn die Verzahnung derart ausgebildet ist, dass ein zusätzlicher Kraftschluss zwischen der dritten Steuerkurve und der Deckplatte entsteht. Erfindungsgemäß bildet die dritte Steuerkurve einen Verstellbereich und wenigstens einen Rastbereich. Grundsätzlich ist das Intervall des Verstellbereiches frei wählbar. Typischerweise erlaubt der Verstellbereich eine Verriegelung des Rastbeschlages in einem Intervall von etwa 20° und insbesondere 10°. Eine Person, die auf einem Sitz, der mit dem Rastbeschlag versehen ist, sitzt, kann dann eine bequeme Sitzposition einstellen. Der Rastbereich hingegen erlaubt eine Verriegelung in nur einer Drehstellung. Es können auch mehrere Verstellbereiche und/oder Rastbereiche vorgesehen sein.

Erfindungsgemäß hat der Sperrarm eine Steuernase, die geeignet ist, mit der dritten Steuerkurve zusammenzuwirken. Die Steuernase ist auf die dritte Steuerkurve abgestimmt und erlaubt somit eine flüssige Drehbewegung und ein zuverlässiges Einrasten. Ein Klemmen des Rastbeschlages kann dadurch ebenfalls vermieden werden.

Es ist bevorzugt, dass die Grundplatte eine ringförmige Seitenwand, die geeignet ist, einen zwischen der Grundplatte und der Deckplatte befindlichen Zwischenraum abzuschließen, aufweist. Es ist weiter bevorzugt, dass die Grundplatte eine Verstärkungsstruktur, welche die Grundplatte versteift, aufweist. Alternativ oder zusätzlich ist bevorzugt, dass die Deckplatte eine ringförmige Seitenwand, die geeignet ist, einen zwischen der Grundplatte und der Deckplatte befindlichen Zwischenraum abzuschließen, aufweist. Weiter bevorzugt hat die Deckplatte eine Verstärkungsstruktur, welche die Deckplatte versteift. Die Seitenwand verhindert ein Eindringen von Verunreinigungen in den Rastbeschlag. Die Funktionsfähigkeit des Rastbeschlages ist damit sichergestellt. Außerdem verhindert die Seitenwand ein versehentliches Eingreifen des Nutzers in den Rastbeschlag und verhindert somit Verletzungen. Die Verstärkungsstruktur, welche auch die Seitenwand umfassen kann, versteift die Grundplatte oder die Deckplatte und kann dadurch eine Verformung des Rastbeschlages verhindern. Diese ist insbesondere dann von Vorteil, wenn zeitweise hohe Drehmomente auf den Rastbeschlag einwirken, so dass dennoch die Funktion unter derartiger Belastung sichergestellt ist.

In einer vorteilhaften Weiterbildung umfasst die Grundplatte eine Federaufnahme zum Aufnehmen einer Feder. Weiter kann die Grundplatte eine Ausnehmung für einen Endabschnitt einer Feder umfassen. Es kann auch eine erste Öffnung für eine Welle vorgesehen sein.

In einer vorteilhaften Weiterbildung umfasst die Deckplatte eine Federaufnahme zum Aufnehmen einer Feder. Weiter kann die Deckplatte eine Ausnehmung für einen Endabschnitt einer Feder umfassen. Es kann auch eine zweite Öffnung für eine Welle vorgesehen sein.

Es ist bevorzugt, dass die Betätigungsplatte wenigstens eine Betätigungsöffnung, insbesondere zwei Betätigungsöffnungen, zum Drehen der Betätigungsplatte aufweist. Die Betätigungsplatte kann in einer vorteilhaften Ausgestaltung eine Federöffnung zum Aufnehmen eines Endbereiches einer Feder aufweisen. Zudem kann die Betätigungsplatte eine dritte Öffnung für eine Welle aufweisen.

Erfindungsgemäß umfasst der Rastbeschlag eine Feder, insbesondere eine Blattfeder oder Spiralfeder, welche die Betätigungsplatte in Richtung der verriegelten Stellung des Sperrarmes vorspannt.

Vorzugsweise hat die Feder einen ersten Endabschnitt, der im eingebauten Zustand im Wesentlichen parallel zu der radialen Achse verläuft, und einen zweiten Endabschnitt, der im eingebauten Zustand im Wesentlichen orthogonal zu der radialen Achse verläuft. Weiter bevorzugt ist der zweite Endabschnitt im eingebauten Zustand in der Federöffnung angeordnet.

Die Feder drängt den Sperrarm in die verriegelte Stellung. Damit ist gewährleistet, dass, sobald der Nutzer die Betätigungsplatte nicht mehr betätigt, der Sperrarm aufgrund der Federkraft in die verriegelte Stellung zurückbewegt wird. Ein ungewolltes Durchrutschen des Rastbeschlages kann so besser verhindert werden. Die für die Feder vorgesehenen Öffnungen, Aufnahmen und Ausnehmungen ermöglichen eine kompakte Konstruktion des Rastbeschlags. Die Aufnahmen und Ausnehmungen sind in der Regel als Vertiefungen ausgebildet.

In einer weiter bevorzugten Ausgestaltung umfasst der Rastbeschlag zwischen drei und zehn, insbesondere zwischen fünf und acht Sperrarmen, die an der Grundplatte, in Umfangsrichtung gleich orientiert, angeordnet sind. Weiter bevorzugt weist lediglich ein Sperrarm eine Steuernase auf. Mehrere Sperrarme steigern das Rastmoment. Die maximale Anzahl an Sperrarmen hängt in erster Linie vom Radius der Grundplatte ab. Besonderer Vorteil hierbei ist, dass der eine Sperrarm, der die Steuernase aufweist, der so genannte Steuerarm, mittelbar über die Betätigungsplatte die restlichen Sperrarme steuert. Kann der Steuerarm also nicht von der entriegelten Stellung in die verriegelte Stellung bewegt werden, gilt das Gleiche für die restlichen Sperrarme. Dadurch kann der volle 360°-Drehwinkel des Rastbeschlags ausgenutzt werden.

Nachfolgend wird eine Ausführungsform der Erfindung anhand der beigefügten Zeichnungen erläutert. Darin zeigen:
- Fig. 1: eine Draufsicht einer Ausführungsform des Rastbeschlages ohne Deckplatte;
- Fig. 2: eine Draufsicht einer Ausführungsform einer Grundplatte;
- Fig. 3: eine Draufsicht einer Ausführungsform einer Deckplatte;
- Fig. 4: eine schematische Darstellung einer Zahnform eines Sperrzahnes;
- Fig. 5: eine schematische Darstellung einer weiteren Zahnform eines Sperrzahnes;
- Fig. 6: eine Draufsicht einer Ausführungsform eines Sperrarmes;
- Fig. 7: eine Draufsicht einer weiteren Ausführungsform des Sperrarmes;
- Fig. 8: eine Draufsicht einer Ausführungsform einer Betätigungsplatte;
- Fig. 9: ein vergrößerter Bereich einer zweiten Steuerkurve aus Fig. 8;
- Fig. 10: eine Draufsicht einer Ausführungsform eines Steuerrings;
- Fig. 11: eine Draufsicht einer Ausführungsform einer Feder;
- Fig. 12: eine Seitenansicht der Feder aus Fig. 11;
- Fig. 13: eine Draufsicht einer Ausführungsform eines Betätigungshebels;
- Fig. 14: eine Seitenansicht des Betätigungshebels aus Fig. 13 und
- Fig. 15: eine Explosionsdarstellung des Rastbeschlages.

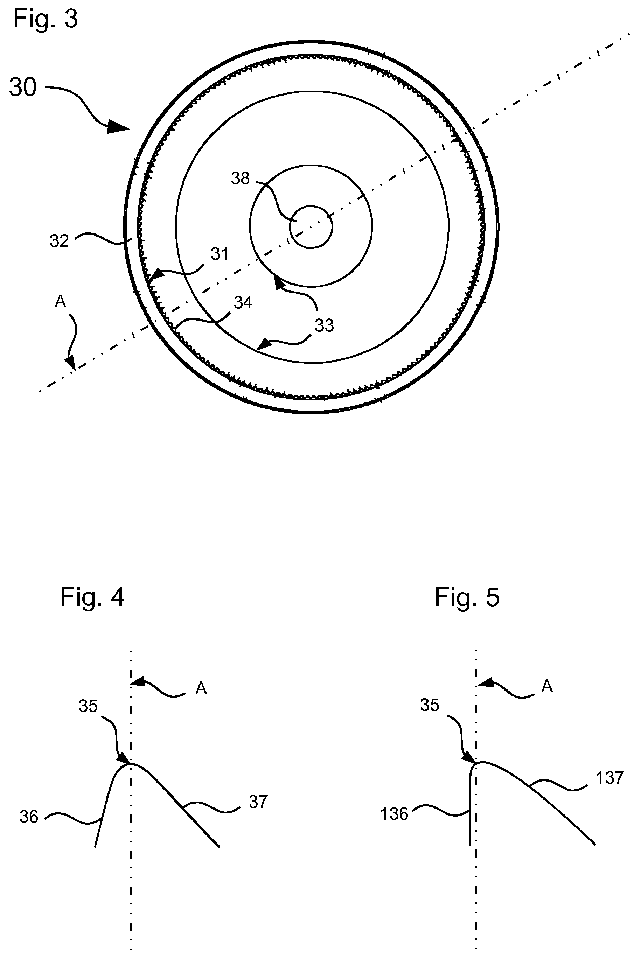

Eine Ausführungsform eines Rastbeschlages 10 umfasst eine Grundplatte 20, eine Deckplatte 30 (siehe Fig. 3), fünf Sperrarme 40, eine Betätigungsplatte 50, einen Steuerring 60, eine Feder 70 und einen Betätigungshebel 80. Eine radiale Achse A verläuft entlang einer radialen Richtung und durch das Zentrum des Rastbeschlages 10.

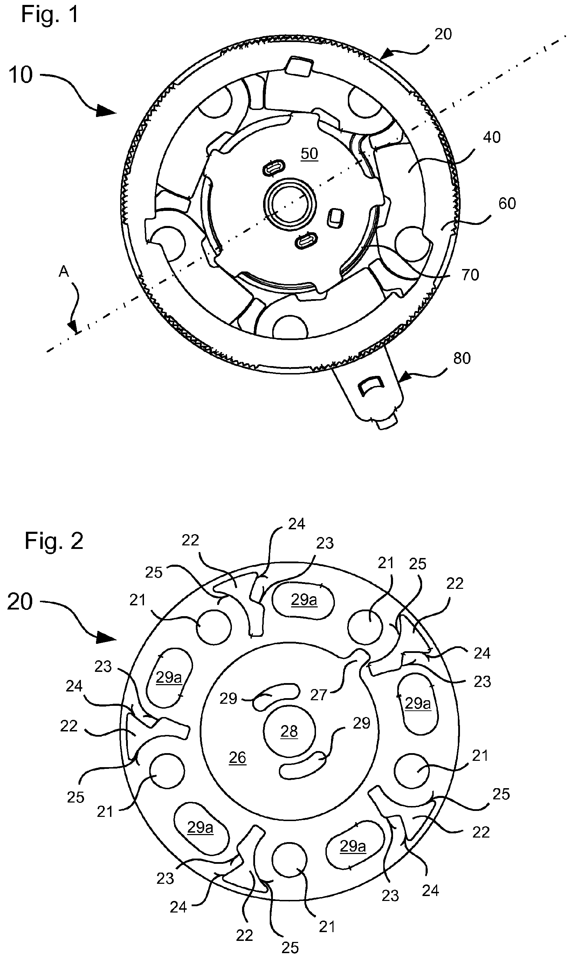

Die Grundplatte 20 umfasst, wie Fig. 2 zu erkennen gibt, fünf Lagervorsprünge 21 und fünf Stützvorsprünge 22. In der Grundplatte 20 sind eine Federaufnahme 26 und eine Ausnehmung 27 in Form von Vertiefungen gebildet. In der Federaufnahme 26 sind zwei Langlöcher 29 und eine erste Öffnung 28 gebildet.

Die Lagervorsprünge 21 sind zylinderförmig und springen von einer Ebene der Grundplatte 20 hervor. Die Lagervorsprünge 21 sind in Umfangsrichtung der Grundplatte 20 äquidistant angeordnet.

Die Stützvorsprünge 22 springen von einer Ebene der Grundplatte 20 in die gleiche Richtung wie die Lagervorsprünge 21 vor. Die Stützvorsprünge 22 haben eine Stützfläche 23 sowie eine erste Führungsfläche 24 und eine zweite Führungsfläche 25. Die Stützvorsprünge 22 sind äquidistant in Umfangsrichtung der Grundplatte 20 angeordnet. In Umfangsrichtung betrachtet sind die Stützvorsprünge 22 und die Lagervorsprünge 21 im Wechsel angeordnet.

Die Stützfläche 23 ist der radialen Außenseite der Grundplatte 20 zugewandt. Die erste Führungsfläche 24 ist kreisbogenförmig ausgebildet und verläuft im Wesentlichen unter einem Winkel zu der radialen Richtung der Grundplatte 20 und im Wesentlichen orthogonal zu der Stützfläche 23.

Die zweite Führungsfläche 25 ist kreisbogenförmig ausgebildet und dem benachbarten Stützvorsprung 22 zugewandt. Die zweite Führungsfläche 25 und ein Abschnitt des Lagervorsprungs 21 begrenzen einen kreisbogenförmig verlaufenden Führungskanal.

Die Federaufnahme 26 und die Ausnehmung 27 sind miteinander verbunden. Die Ausnehmung 27 ist zwischen einem der Lagervorsprünge 21 und einem der Stützvorsprünge 22 angeordnet.

Die erste Öffnung 28 ist zentral in der Grundplatte 20 gebildet. Die Langlöcher 29 sind benachbart zu der ersten Öffnung 28 gebildet und verlaufen in Umfangsrichtung.

Elliptische Vorsprünge sind an der Grundplatte 20 gebildet. Die elliptischen Vorsprünge springen auf die andere Seite der Grundplatte 20 wie die Lagervorsprünge 21 und die Stützvorsprünge 22 vor. Die elliptischen Vorsprünge bilden eine erste Verstärkungsstruktur 29a. Die Grundplatte 20 ist dadurch versteift. Zudem bilden die elliptischen Vorsprünge Befestigungsvorsprünge 29b. Die Befestigungsvorsprünge 29b dienen der Befestigung des Rastbeschlages an einem Sitz oder einer Lehne. Der Rastbeschlag 10 wird vorzugsweise mit den Befestigungsvorsprüngen 29b an den Sitz oder die Lehne geschweißt. Denkbar ist auch eine formschlüssige Verbindung.

Die Deckplatte 30 hat eine Innenverzahnung 31 und eine ringförmige Seitenwand 32. In der Deckplatte 30 ist eine zweite Öffnung 38 gebildet. Zudem ist an der Deckplatte 30 eine zweite Verstärkungsstruktur 33 durch Erhebungen und Vertiefungen aus der Ebene der Deckplatte 30 gebildet.

Die Innenverzahnung 31 hat erste Sperrzähne 34, die in Umfangsrichtung der Deckplatte 30 angeordnet sind und radial nach innen orientiert sind. Die Deckplatte 30 ist so dimensioniert, dass sie die Grundplatte 20 aufnehmen kann. Die ringförmige Seitenwand 32 schließt dann einen Zwischenraum zwischen der Grundplatte 20 und der Deckplatte 30 ab.

Wie in Fig. 4 gezeigt, haben die ersten Sperrzähne 34 einen Scheitelpunkt 35, eine erste Zahnflanke 36 und eine zweite Zahnflanke 37. Die erste Zahnflanke 36 verläuft unter einem anderen Winkel zu der radialen Achse A als die zweite Zahnflanke 37. Die ersten Sperrzähne 34 sind so in der Deckplatte 30 angeordnet, dass die erste Zahnflanke 36 und die zweite Zahnflanke 37 im Wechsel angeordnet sind. Das bedeutet die erste Zahnflanke 36 des einen ersten Sperrzahnes 34 ist stets der zweiten Zahnflanke 37 des benachbarten ersten Sperrzahnes 34 zugewandt.

Fig. 5 zeigt eine alternative Zahnform für die ersten Sperrzähne 34. Eine erste Zahnflanke 136 verläuft im Wesentlichen parallel zu der radialen Achse A. Eine zweite Zahnflanke 137 verläuft gekrümmt. In jedem Fall sind die ersten Sperrzähne 34 asymmetrisch bezüglich der radialen Achse A ausgebildet.

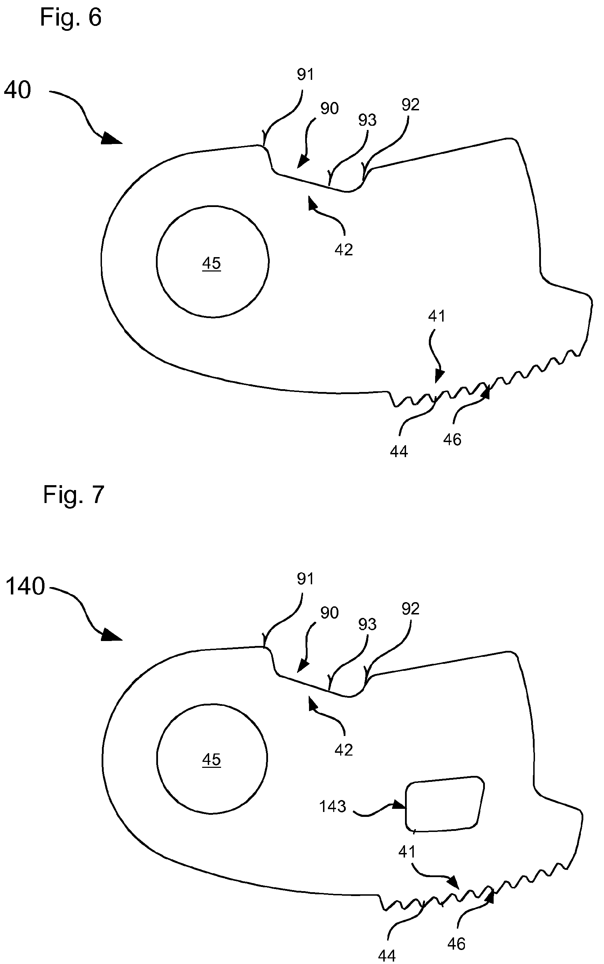

Der Sperrarm 40, der in Fig. 6 dargestellt ist, umfasst einen ersten Bereich 41, einen zweiten Bereich 42 und eine Lageröffnung 45. Die Lageröffnung 45 ist an einem Endbereich des Sperrarmes 40 angeordnet. Die Lageröffnung 45 ist so ausgebildet, dass der Lagervorsprung 21 nahezu spielfrei darin eingefügt werden kann.

Der erste Bereich 41 ist im Einbauzustand an einer radial äußeren Fläche des Sperrarmes 40 angeordnet. Der erste Bereich 41 umfasst zweite Sperrzähne 44. Die zweiten Sperrzähne 44 bilden einen Sperrabschnitt 46. Die zweiten Sperrzähne 44 sind geeignet, mit den ersten Sperrzähnen 34 zu kämmen. Die zweiten Sperrzähne 44 sind insbesondere in einer der in den Fig. 4 und Fig. 5 gezeigten Zahnform gebildet.

Der zweite Bereich 42 ist im Einbauzustand an einer radial inneren Fläche des Sperrarmes 40 vorgesehen. Der zweite Bereich 42 bildet eine erste Steuerkurve 90. Die erste Steuerkurve 90 hat einen ersten Entriegelungsbereich 91, einen ersten Verriegelungsbereich 92 und einen ersten Stützbereich 93.

Der Entriegelungsbereich 91 verläuft zunächst gekrümmt und bildet eine rückspringende Flanke. Die Flanke geht über in den Stützbereich 93, der im Wesentlichen entlang der Erstreckungsrichtung des Sperrarmes 40 verläuft. Anschließend befindet sich der Verriegelungsbereich 92, der ebenfalls durch eine Flanke mit einem anschließenden gekrümmten Bereich gebildet wird. Die Funktionsweise der Bereiche wird später beschrieben.

Ein Sperr- oder Steuerarm 140 ist, wie Fig. 7 zu erkennen gibt, nahezu identisch zu dem Sperrarm 40 ausgebildet. Der Sperrarm 140 umfasst zusätzlich noch eine Steuernase 143. Die Steuernase 143 springt aus einer Ebene des Sperrarmes 140 hervor. Die Steuernase 143 ist geeignet, mit einer Steuerkurve zusammenzuwirken.

Die Betätigungsplatte 50 umfasst zwei Betätigungsöffnungen 51, eine Federöffnung 52 und eine dritte Öffnung 58. Die dritte Öffnung 53 ist zentral in der Betätigungsplatte 50 gebildet. Die beiden Betätigungsöffnungen 51 sind benachbart zu der dritten Öffnung 58 gebildet. Die äußere Umfangsfläche der Betätigungsplatte 50 bildet eine zweite Steuerkurve 100.

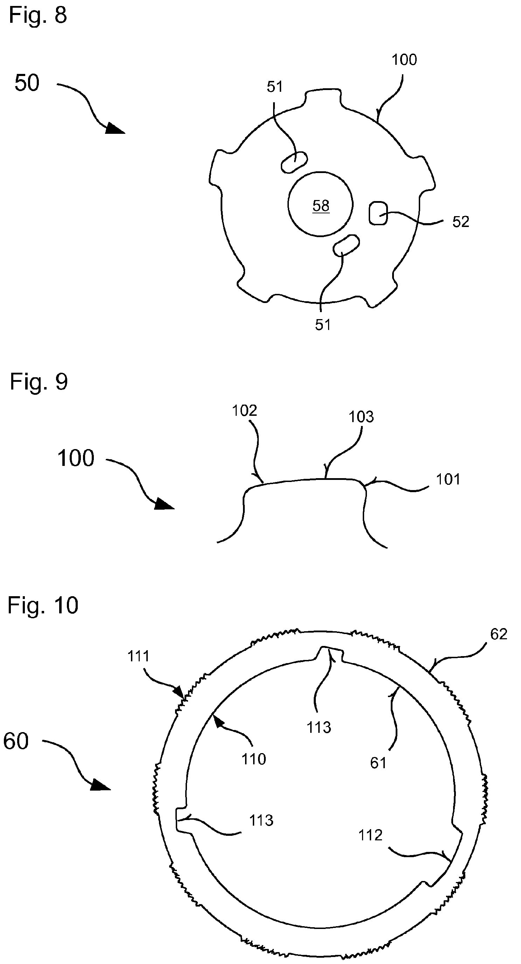

Die zweite Steuerkurve 100 hat insgesamt fünf zweite Entriegelungsbereiche 101, fünf zweite Verriegelungsbereiche 102 und fünf zweite Stützbereiche 103. Die zweite Steuerkurve 100 wird anhand von Fig. 9, die einen Bereich der zweiten Steuerkurve 100 zeigt, erläutert.

Der zweite Entriegelungsbereich 101 verläuft zunächst im Wesentlichen in eine radiale Richtung der Betätigungsplatte 50 nach außen. Hiernach schließt sich ein gekrümmter Bereich an. Der gekrümmte Bereich geht in den zweiten Stützbereich 103 über, der sich im Wesentlichen entlang der Umfangsrichtung der Betätigungsplatte 50 erstreckt. Anschließend befindet sich der zweite Verriegelungsbereich 102, der wiederum in einen gekrümmten Bereich übergeht und sodann auf den hauptsächlichen Umfang der Betätigungsplatte 50 zurück verläuft.

Eine dritte Steuerkurve 110 wird von dem Steuerring 60, der kreisringförmig ausgestaltet ist, gebildet. Die dritte Steuerkurve 110 verläuft entlang einer inneren Umfangsfläche 61 des Steuerrings 60. Die dritte Steuerkurve 110 hat zudem eine Verzahnung 111, die an einer äußeren Umfangsfläche 62 des Steuerrings 60 vorgesehen ist. Die dritte Steuerkurve 110 muss nicht von einem Steuerring 60 gebildet werden, sondern kann auch einteilig mit der Deckplatte 30 gebildet sein. Die Verzahnung 111 ist dann überflüssig.

Die dritte Steuerkurve 110 weist einen Verstellbereich 112 und zwei Rastbereiche 113 auf. Der Verstellbereich 112 und die beiden Rastbereiche 113 sind als Aussparungen in dem Steuerring 60 gebildet. Der Verstellbereich 112 und der Rastbereich 113 bestimmen die Positionen, in denen die Sperrarme 40 von der entriegelten in die verriegelte Position bewegt werden können.

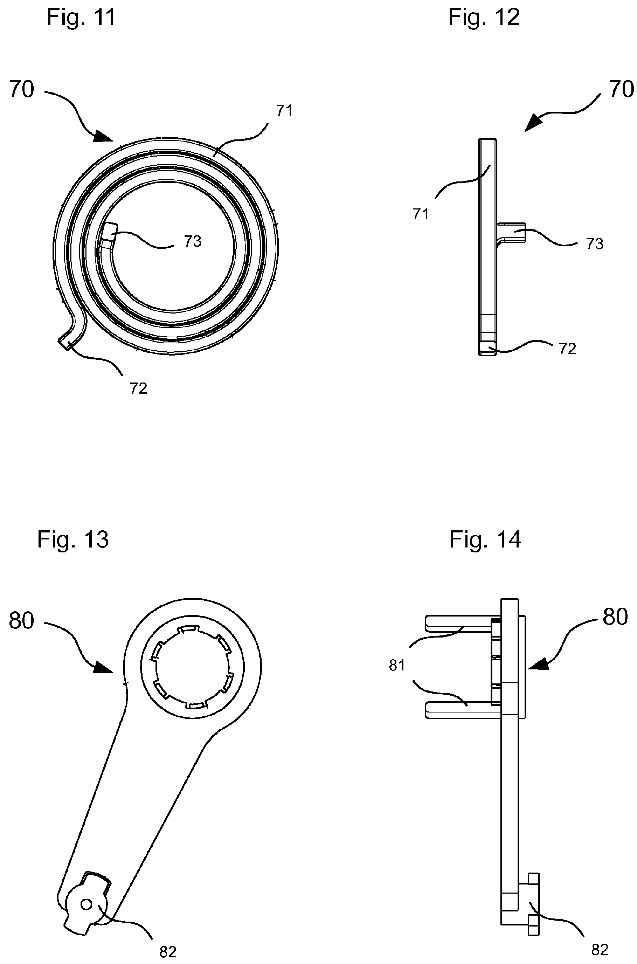

Die Feder 70, dargestellt in Fig. 11 und Fig. 12, ist als eine Spiralfeder 71 ausgebildet. Die Feder 70 kann beispielsweise auch als Blattfeder ausgebildet sein. Die Feder 70 hat einen ersten Endabschnitt 72 und einen zweiten Endabschnitt 73. Der erste Endabschnitt 72 verläuft in der Ebene der Feder 70 radial nach außen. Der zweite Endabschnitt 73 verläuft im Wesentlichen senkrecht zu der Ebene der Feder 70. Die Spiralfeder 71 ist so ausgebildet, dass sich eine Welle hindurch erstrecken kann.

Fig. 13 und Fig. 14 zeigen den Betätigungshebel 80. Der Betätigungshebel 80 hat zwei Betätigungsvorsprünge 81 und einen Betätigungsgriff 82. Die beiden Betätigungsvorsprünge 81 verlaufen im Wesentlichen senkrecht zu der Ebene des Betätigungshebels 80. Der Betätigungsgriff 82 erstreckt sich zu der den Betätigungsvorsprüngen 81 abgewandten Seite.

Der Betätigungshebel 80 kann mit einer Welle (nicht dargestellt) verbunden sein, die sich zwischen den Betätigungsvorsprüngen 81 in die gleiche Richtung erstreckt. Die Welle ist so dimensioniert, dass sie in die erste bis dritte Öffnung 28, 38, 58 eingefügt werden kann. Die Welle kann auch so ausgebildet sein, dass sie an wenigstens einer der ersten bis dritten Öffnungen 28, 38, 58 drehbar festgelegt werden kann.

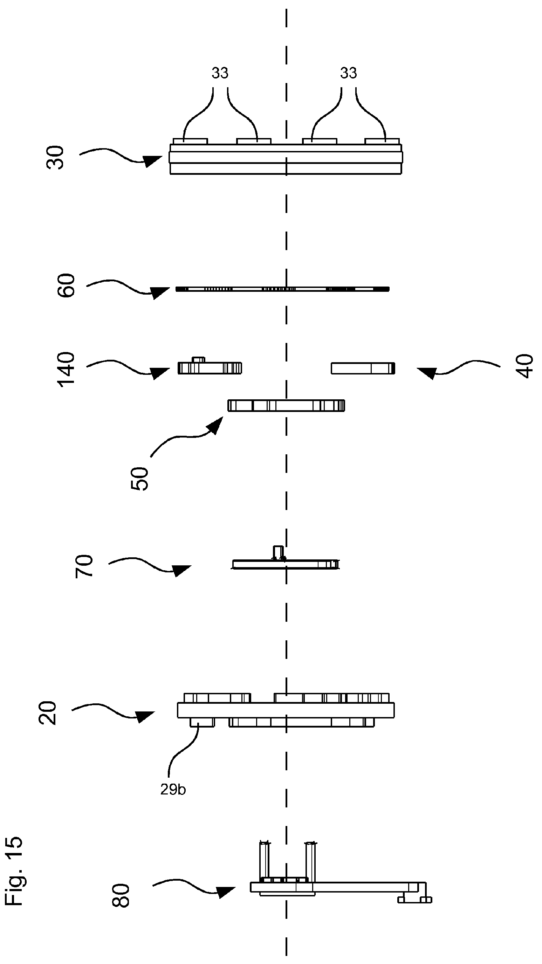

Anhand von Fig. 15 wird der Zusammenbau des Rastbeschlages 10 erläutert. Zunächst wird die Grundplatte 20 bereitgestellt. Sodann wird die Spiralfeder 71 in die Federaufnahme 26 eingefügt. Der erste Endabschnitt 72 kommt in der Ausnehmung 27 zu liegen. Hiernach werden vier Sperrarme 40 und ein Sperr- oder Steuerarm 140 mit den Lageröffnungen 45 an den Lagervorsprüngen 21 drehbar angeordnet. Einer der Sperrarme 40, 140 kommt dabei so zu liegen, dass der erste Endabschnitt 72 gegen herausfallen gesichert ist.

Die Betätigungsplatte 50 wird so angeordnet, dass die erste Öffnung 28 und die dritte Öffnung 58 in Flucht zu liegen kommen. Der zweite Endabschnitt 73 ist dann in die Federöffnung 52 eingefügt. Die Betätigungsplatte 50 wird so angeordnet, dass die Sperrarme 40, 140 in die entriegelte Stellung gebracht werden können.

Die entriegelte Stellung ist erreicht, wenn die Sperrarme 40, 140 in Richtung des Zentrums der Grundplatte 20 geschwenkt sind. Die verriegelte Stellung ist erreicht, wenn die Sperrarme 40, 140 nach außen geschwenkt sind und die ersten Sperrzähne 34 mit den zweiten Sperrzähnen 44 kämmen.

Die dritte Steuerkurve 110 wird in Form des Steuerrings 60 in die Deckplatte 30 eingefügt. Die Deckplatte 30 wird dann über die Grundplatte 20 gestülpt. Die ringförmige Seitenwand 32 schließt dabei den Zwischenraum zwischen Grundplatte 20 und Deckplatte 30 ab und schützt so die darin befindlichen Bauteile.

Zuletzt wird der Betätigungshebel 80 verbaut. Die Betätigungsvorsprünge 81 werden durch die Langlöcher 29 eingeführt und kommen in den Betätigungsöffnungen 51 zu liegen. Der Rastbeschlag 10 kann dann beispielsweise durch Kleben, Löten, Schweißen und dergleichen fertig gestellt werden.

Wenn der Betätigungshebel 80 eine Welle aufweist, kann diese durch eine Clipsverbindung an der zweiten Öffnung 38 drehbar festgelegt werden. Auch dadurch wird der Rastbeschlag 10 zusammen gehalten.

Ausgehend von Fig. 1 wird im Folgenden die Funktionsweise des Rastbeschlages 10 erläutert. Der Rastbeschlag 10 ist zunächst blockiert. Die Sperrarme 40, 140 befinden sich in der verriegelten Stellung. Die Steuernase 143 befindet sich in einem der Rastbereiche 113. Die Sperrarme 40, 140 werden durch die zweiten Stützbereiche 103, die mit den ersten Verriegelungsbereichen 92 in Kontakt sind, nach außen gedrückt. Die ersten Sperrzähne 34 kämmen mit den zweiten Sperrzähnen 44.

Zum Entriegeln des Rastbeschlages 10 wird der Betätigungshebel 80 im Uhrzeigersinn gedrückt. Dadurch wird die Betätigungsplatte 50 ebenfalls im Uhrzeigersinn, gegen die Federkraft der Feder 70, gedreht. Die zweiten Stützbereiche 103 kommen mit den ersten Verriegelungsbereichen 92 außer Kontakt. Aufgrund der näherungsweise spielfreien Lagerung der Sperrarme 40, 140, bleiben die Sperrarme 40, 140 in der verriegelten Stellung.

Wird die Betätigungsplatte 50 weiter gedreht, erfassen die zweiten Entriegelungsbereiche 101 die ersten Entriegelungsbereiche 91. Die Sperrarme 40, 140 beginnen sich in Richtung der entriegelten Stellung zu bewegen. Die Endbereiche der Sperrarme gleiten dabei entlang der ersten Führungsfläche 24 und der zweiten Führungsfläche 25 und werden von diesen nahezu spielfrei geführt. Die Bewegung dauert an, bis die Sperrarme 40, 140 an den jeweiligen Stützflächen 23 zu liegen kommen. Die Sperrarme 40, 140 sind jetzt in der entriegelten Stellung. Die Grundplatte 20 kann relativ zu der Deckplatte 30 gedreht werden.

Bei der Relativdrehung der Grundplatte 20 gegenüber der Deckplatte 30 gleitet die Steuernase 143 entlang der dritten Steuerkurve 110. Wird der Betätigungshebel 80 nicht mehr in die Entriegelungsrichtung (im Uhrzeigersinn) betätigt, bleibt die Grundplatte 20 dennoch gegenüber der Deckplatte 30 drehbar. Die Federkraft spannt zwar die Betätigungsplatte 50 in Verriegelungsrichtung (entgegen dem Uhrzeigersinn) vor und der zweite Verriegelungsbereich 102 und der erste Verriegelungsbereich 92 erfassen einander. Die Steuernase 143 verhindert jedoch eine Bewegung des Sperrarmes 140, so dass die Betätigungsplatte 50 auch auf die übrigen Sperrarme 40 keine Kraft ausübt. Die Federkraft wird gleichsam über die Steuernase 143 in den Steuerring 60 geleitet. Der zweite Stützbereich 103 stützt die Sperrarme 40, 140 an dem ersten Stützbereich 93 ab.

Wird die Deckplatte 30 beispielsweise so gedreht, dass die Steuernase 143 den Verstellbereich 112 erreicht, kann sich der Sperrarm 140 bewegen. Der zweite Verriegelungsbereich 102 drückt den ersten Verriegelungsbereich 92 nach außen. Der zweite Stützbereich 103 erfasst den ersten Verriegelungsbereich 92 und schwenkt die Sperrarme 40, 140 wieder in die verriegelte Stellung. Wenn auf den Rastbeschlag 10 dabei noch ein Drehmoment wirkt, wird durch die Form der ersten Sperrzähne 34 und der zweiten Sperrzähne 44 die Bewegung der Sperrarme 40, 140 in die verriegelte Stellung, also das Einrasten, begünstigt. Der Rastbeschlag 10 ist blockiert.

Der Rastbeschlag 10 entsprechend der vorliegenden Erfindung hat in eine seiner Drehrichtungen ein wesentlich höheres Rastmoment als in der anderen Drehrichtung. Dies wird durch die asymmetrische Ausgestaltung der Sperrzähne 34, 44 erreicht. Eine derartige Ausgestaltung erlaubt zudem ein zuverlässigeres Eingreifen der Sperrzähne 34, 44 auch bei höheren Winkelgeschwindigkeiten. Der Verschleiß des Rastbeschlages 10 kann ebenso wie die Geräuschentwicklung beim Betätigen herabgesetzt werden.

Der Rastbeschlag 10 entsprechend der vorliegenden Erfindung kann bei einem Durchmesser von nur 62 mm und bei Verwendung von fünf Sperrarmen 40 140 ein Rastmoment von bis zu 2000 Nm erreichen. Ein Verstellinkrement von 2° erlaubt eine präzise Positionierung einer Sitzlehne in der gewünschten Stellung.

### Bezugszeichenliste

- 10: Rastbeschlag

- 20: Grundplatte
- 21: Lagervorsprung
- 22: Stützvorsprung
- 23: Stützfläche
- 24: erste Führungsfläche
- 25: zweite Führungsfläche
- 26: Federaufnahme
- 27: Ausnehmung
- 28: erste Öffnung
- 29: Langloch
- 29a: erste Verstärkungsstruktur
- 29b: Befestigungsvorsprung

- 30: Deckplatte
- 31: Innenverzahnung
- 32: Seitenwand
- 33: zweite Verstärkungsstruktur
- 34: erster Sperrzahn
- 35: Scheitelpunkt
- 36: erste Zahnflanke
- 37: zweite Zahnflanke
- 38: zweite Öffnung

- 40: Sperrarm
- 41: erster Bereich
- 42: zweiter Bereich
- 43: Steuernase
- 44: zweiter Sperrzahn
- 45: Lageröffnung
- 46: Sperrabschnitt

- 50: Betätigungsplatte
- 51: Betätigungsöffnung
- 52: Federöffnung
- 58: dritte Öffnung

- 60: Steuerring
- 61: innere Umfangsfläche
- 62: äußeren Umfangsfläche

- 70: Feder
- 71: Spiralfeder
- 72: erster Endabschnitt
- 73: zweiter Endabschnitt

- 80: Betätigungshebel
- 81: Betätigungsvorsprung
- 82: Betätigungsgriff

- 90: erste Steuerkurve
- 91: erster Entriegelungsbereich
- 92: erster Verriegelungsbereich
- 93: erster Stützbereich

- 100: zweite Steuerkurve
- 101: zweiter Entriegelungsbereich
- 102: zweiter Verriegelungsbereich
- 103: zweiter Stützbereich

- 110: dritte Steuerkurve
- 111: Verzahnung
- 112: Verstellbereich
- 113: Rastbereich

- 140: Sperrarm/Steuerarm
- 143: Steuernase

- A: radiale Achse

## Patentansprüche

1. Rastbeschlag (10) für einen Sitz eines Kraftfahrzeugs, umfassend:
eine Grundplatte (20), die eine Vielzahl an Lagervorsprüngen (21) aufweist;
eine relativ zu der Grundplatte (20) drehbare Deckplatte (30), die eine Innenverzahnung (31) aufweist;
eine Vielzahl an in Umfangsrichtung gleich orientierten Sperrarmen (40, 140), die jeweils an einem der Lagervorsprünge (21) gelagert und zwischen einer entriegelten Stellung, in der eine Drehung der Deckplatte (30) relativ zu der Grundplatte (20) möglich ist, und einer verriegelten Stellung, in der eine Drehung der Deckplatte (30) relativ zu der Grundplatte (20) blockiert ist, schwenkbar sind;
eine relativ zu der Grundplatte (20) drehbare Betätigungsplatte (50), durch welche die Sperrarme (40, 140) zwischen der entriegelten Stellung und der verriegelten Stellung bewegbar sind;
einen die Bewegung der Sperrarme (40, 140) steuernden Steuerring (60), der eine innere Umfangsfläche (61) hat, und
eine Feder (70), welche die Betätigungsplatte (50) in Richtung auf die verriegelte Stellung vorspannt;
wobei die Innenverzahnung (31) erste Sperrzähne (34) aufweist, die einen Scheitelpunkt (35) haben und bezüglich einer radialen Achse (A), die durch den Scheitelpunkt (35) verläuft, asymmetrisch ausgebildet sind;
wobei die Sperrarme (40, 140) jeweils einen Sperrabschnitt (46) umfassen, der zweite Sperrzähne (44) aufweist, die in der verriegelten Stellung mit den ersten Sperrzähnen (34) kämmen;
wobei die Sperrarme (40, 140) jeweils eine erste Steuerkurve (90) bilden, die einen ersten Entriegelungsbereich (91), einen ersten Verriegelungsbereich (92) und einen ersten Stützbereich (93) hat;
wobei die Betätigungsplatte (50) eine mit der ersten Steuerkurve (90) zusammenwirkende zweite Steuerkurve (100) bildet, die einen zweiten Entriegelungsbereich (101), einen zweiten Verriegelungsbereich (102) und einen zweiten Stützbereich (103) hat;
wobei die innere Umfangsfläche (61) des Steuerrings (60) eine dritte Steuerkurve (110) bildet, die einen Verstellbereich (112) und wenigstens einen Rastbereich (113) hat,
wobei wenigstens einer der Sperrarme (40, 140) eine mit der dritten Steuerkurve (110) zusammenwirkende Steuernase (43) aufweist, und
wobei der Steuerring (60) zur Fixierung an der Grundplatte (20) oder an der Deckplatte (30) eine äußere Umfangsfläche (62) mit einer Verzahnung (111) aufweist.

2. Rastbeschlag (10) nach Anspruch 1, **dadurch gekennzeichnet, dass** die ersten Sperrzähne (34) und/oder die zweiten Sperrzähne (44) jeweils eine erste Zahnflanke (36), die im Wesentlichen parallel zu der radialen Achse (A) verläuft, und eine zweite Zahnflanke (37), die unter einem spitzen Winkel (39) zu der radialen Achse (A) verläuft oder die gekrümmt verläuft, aufweisen.

3. Rastbeschlag (10) nach Anspruch 1 oder 2, **dadurch gekennzeichnet, dass** die Lagervorsprünge (21) jeweils zylinderförmig ausgebildet sind, wobei vorzugsweise die Sperrarme (40, 140) nahezu spielfrei jeweils an einem der Lagervorsprünge (21) gelagert sind.

4. Rastbeschlag (10) nach einem der Ansprüche 1 bis 3, **dadurch gekennzeichnet, dass** die Grundplatte (20) wenigstens einen Stützvorsprung (22), der eine Stützfläche (23), die geeignet ist, einen der Sperrarme (40, 140) abzustützen, sowie eine erste Führungsfläche (24) und eine zweite Führungsfläche (25), die jeweils geeignet sind, einen Abschnitt des Sperrarmes (40, 140), vorzugsweise nahezu spielfrei, zu führen, aufweist.

5. Rastbeschlag (10) nach einem der Ansprüche 1 bis 4, **dadurch gekennzeichnet, dass** die Sperrarme (40, 140) jeweils eine Lageröffnung (45) aufweisen.

6. Rastbeschlag nach nach einem der Ansprüche 1 bis 5, **dadurch gekennzeichnet, dass** die äußere Umfangsfläche (62) abschnittsweise, mit einer Verzahnung (111) versehen ist, wobei vorzusgsweise die Verzahnung (111) geeignet ist, den Steuerring (60) an der Deckplatte (30) vorkraftschlüssig zu fixieren.

7. Rastbeschlag (10) nach einem der Ansprüche 1 bis 6, **dadurch gekennzeichnet, dass** die Grundplatte (20) eine ringförmige Seitenwand, die geeignet ist, einen zwischen der Grundplatte (20) und der Deckplatte (30) befindlichen Zwischenraum abzuschließen, und/oder eine erste Verstärkungsstruktur (29a), welche die Grundplatte (30) versteift, aufweist.

8. Rastbeschlag (10) nach einem der Ansprüche 1 bis 6, **dadurch gekennzeichnet, dass** die Deckplatte (30) eine ringförmige Seitenwand (32), die geeignet ist, einen zwischen der Grundplatte (20) und der Deckplatte (30) befindlichen Zwischenraum abzuschließen, und/oder eine zweite Verstärkungsstruktur (33), welche die Deckplatte (30) versteift, aufweist.

9. Rastbeschlag (10) nach einem der Ansprüche 1 bis 8, **dadurch gekennzeichnet, dass** die vorzugsweise als Blattfeder oder Spiralfeder ausgebildete Feder (70) einen ersten Endabschnitt (72), der im Wesentlichen parallel zu der radialen Achse (A) verläuft, und einen zweiten Endabschnitt (73), der im Wesentlichen orthogonal zu der radialen Achse (A) verläuft, aufweist.

10. Rastbeschlag (10) nach einem der Ansprüche 1 bis 9, **dadurch gekennzeichnet, dass** die Grundplatte (20) und/oder die Deckplatte (30) eine Federaufnahme (26) zum Aufnehmen der Feder (70) und/oder eine Ausnehmung (27) für den ersten Endabschnitt (72) der Feder (70) und/oder eine erste Öffnung (28) für einen Betätigungshebel (80) aufweist.

11. Rastbeschlag (10) nach einem der Ansprüche 1 bis 10, gekennzeichnet, dass die Betätigungsplatte (50) wenigstens eine Betätigungsöffnung (51), insbesondere zwei Betätigungsöffnungen (51), zum Drehen der Betätigungsplatte (50) aufweist und/oder dass die Betätigungsplatte (50) eine Federöffnung (52) zum Aufnehmen des zweiten Endabschnitts (73) der Feder (70) aufweist und/oder dass die Betätigungsplatte (50) eine dritte Öffnung (58) für einen Betätigungshebel (80) aufweist.

## Claims

1. A latching fitting (10) for a seat of a motor vehicle, comprising:
a base plate (20) which has a plurality of mounting projections (21);
a cover plate (30) rotatable relative to the base plate (20) having an inner toothing (31);
a plurality of blocking arms (40, 140) equally oriented in circumferential direction, each mounted on one of the mounting projections (21) and pivotable between an unlocked position, in which a rotation of the cover plate (30) relative to the base plate (20) is possible, and a locked position, in which a rotation of the cover plate (30) relative to the base plate (20) is blocked;
an actuating plate (50) rotatable relative to the base plate (20), by means of which the blocking arms (40, 140) are movable between the unlocked position and the locked position;
a control ring (60) controlling the movement of the blocking arms (40, 140), which has an inner circumferential surface (61), and
a spring (70) which biases the actuating plate (50) in direction of the locked position;
the inner toothing (31) having first blocking teeth (34) which have a vertex (35) and are designed in an asymmetrical manner relative to a radial axis (A) which runs through the vertex (35);
each of the blocking arms (40, 140) comprising a blocking portion (46) which has second blocking teeth (44) which mesh with the first blocking teeth (34) in the locked position;
each of the blocking arms (40, 140) forming a first control curve (90) which has a first unlocking region (91), a first locking region (92), and a first supporting region (93);
the actuating plate (50) forming a second control curve (100) co-operating with the first control curve (90) which has a second unlocking region (101), a second locking region (102), and a second supporting region (103);
the inner circumferential surface (61) of the control ring (60) forming a third control curve (110) which has an adjustment region (112) and at least one latching region (113),
at least one of the blocking arms (40, 140) having a control catch (43) which is co-operating with the third control curve (110), and
the control ring (60) having an outer circumferential surface (62) with a toothing (111) for fixation to the base plate (20) or to the cover plate (30).

2. The latching fitting (10) according to claim 1, **characterized in that** each of the first locking teeth (34) and/or the second locking teeth (44) has a first tooth flank (36), which extends essentially parallel to the radial axis (A), and a second tooth flank (37), which extends in an acute angle (39) to the radial axis (A) or is curved.

3. The latching fitting (10) according to claim 1 or 2, **characterized in that** each of the mounting projections (21) is designed in a cylindrical shape, each of the blocking arms (40, 140) preferably being mounted on one of the mounting projections (21) virtually without play.

4. The latching fitting (10) according to any of claims 1 to 3, **characterized in that** the base plate (20) has at least one supporting projection (22) which has a supporting surface (23) which is adapted for supporting one of the blocking arms (40, 140) as well as a first guiding surface (24) and a second guiding surface (25) both of which are adapted for guiding a portion of the blocking arm (40, 140), preferably virtually without play.

5. The latching fitting (10) according to any of claims 1 to 4, **characterized in that** each of the blocking arms (40, 140) has a mount opening (45).

6. The latching fitting (10) according to any of claims 1 to 5, **characterized in that** the outer circumferential surface (62) is provided, in an intermittent manner, with a toothing (111), the toothing (111) preferably being suitable for fixing the control ring (60) to the cover plate (30) in a force-fit manner.

7. The latching fitting (10) according to any of claims 1 to 6, **characterized in that** the base plate (20) has a ring-shaped sidewall which is adapted for covering a space extending between the base plate (20) and the cover plate (30) and/or a first reinforcement structure (29a) which reinforces the base plate (20).

8. The latching fitting (10) according to any of claims 1 to 6, **characterized in that** the cover plate (30) has a ring-shaped sidewall (32) which is adapted for covering a space extending between the base plate (20) and the cover plate (30) and/or a second reinforcement structure (33) which stiffens the cover plate (30).

9. The latching fitting (10) according to any of claims 1 to 8, **characterized in that** the spring (70), which is preferably designed as a leaf spring or a spiral spring, has a first end portion (72) which extends essentially parallel to the radial axis (A) and a second end portion (73) which extends essentially orthogonal to the radial axis (A).

10. The latching fitting (10) according to any of claims 1 to 9, **characterized in that** the base plate (20) and/or cover plate (30) have a spring retainer (26) for retaining the spring (70) and/or a recess (27) for the first end portion (72) of the spring (70) and/or a first opening (28) for an actuation lever (80).

11. The latching fitting (10) according to any of claims 1 to 10, **characterized in that** the actuation plate (50) has at least one actuation opening (51), in particular two actuation openings (51), for rotating the actuation plate (50), and/or that the actuation plate (50) has a spring opening (52) for retaining the second end portion (73) of the spring (70), and/or that the actuation plate (50) has a third opening (58) for an actuation lever (80).

## Revendications

1. Ferrure à crans d'arrêt (10) pour le siège d'un véhicule automobile, comprenant :
une plaque de base (20) qui comprend une multitude de saillies de montage (21) ;
une plaque de couverture (30) rotative par rapport à la plaque de base (20) et présentant une denture intérieure (31) ;
une multitude de bras de blocage (40, 140) orientés dans le même sens en direction périphérique, qui sont montés chacun sur l'une des saillies de montage (21) et susceptibles de pivoter entre une position déverrouillée dans laquelle une rotation de la plaque de couverture (30) par rapport à la plaque de base (20) est possible, et une position verrouillée dans laquelle une rotation de la plaque de couverture (30) par rapport à la plaque de base (20) est bloquée ;
une plaque d'actionnement (50) rotative par rapport à la plaque de base (20), par laquelle les bras de blocage (40, 140) sont mobiles entre la position déverrouillée et la position verrouillée ;
un anneau de commande (60) qui commande le mouvement des bras de blocage (40, 140) et qui présente une surface périphérique intérieure (61) ; et
un ressort (70) qui précontraint la plaque d'actionnement (50) en direction de la position verrouillée ;
la denture intérieure (31) présentant des premières dents de blocage (34) qui ont un sommet (35) et qui sont réalisées de façon asymétrique par rapport à un axe radial (A) qui passe par le sommet (35) ;
les bras de blocage (40, 140) comprenant chacun une partie de blocage (46) qui présente des secondes dents de blocage (44) et qui engrènent avec les premières dents de blocage (34) dans la position verrouillée ;
les bras de blocage (40, 140) formant chacun une première came de commande (90) qui présente une première zone de déverrouillage (91), une première zone de verrouillage (92) et une première zone d'appui (93) ;
la plaque d'actionnement (50) formant une seconde came de commande (100) et coopère avec la première came de commande (90) et qui présente une seconde zone de déverrouillage (101), une seconde zone de verrouillage (102) et une seconde zone d'appui (103) ;
la surface périphérique intérieure (61) de l'anneau de commande (60) formant une troisième came de commande (110) qui présente une zone de réglage (112) et au moins une zone d'enclenchement (113),
l'un au moins des bras de blocage (40, 140) comprenant un ergot de commande (43) coopérant avec la troisième came de commande (110), et
l'anneau de commande (60) présentant une surface périphérique extérieure (62) pourvue d'une denture (111) pour la fixation sur la plaque de base (20) ou sur la plaque de couverture (30).

2. Ferrure à crans d'arrêt (10) selon la revendication 1, **caractérisée en ce que** les premières dents de blocage (34) et/ou les secondes dents de blocage (44) présentent chacune un premier flanc de dent (36) s'étendant sensiblement parallèlement à l'axe radial (A), et un second flanc de dent (37) s'étendant sous un angle aigu (39) par rapport à l'axe radial (A) ou s'étendant en courbe.

3. Ferrure à crans d'arrêt (10) selon la revendication 1 ou 2, **caractérisée en ce que** les saillies de montage (21) sont réalisées chacune en forme cylindrique, les bras de blocage (40, 140) étant montés chacun pratiquement sans jeu sur l'une des saillies de montage (21).

4. Ferrure à crans d'arrêt (10) selon l'une des revendications 1 à 3, **caractérisée en ce que** la plaque de base (20) comprend au moins une saillie d'appui (22) qui présente une surface d'appui (23) apte à soutenir l'un des bras de blocage (40, 140), ainsi qu'une première surface de guidage (24) et une seconde surface de guidage (25) qui sont chacune aptes à guider une partie du bras de blocage (40, 140), de préférence pratiquement sans jeu.

5. Ferrure à crans d'arrêt (10) selon l'une des revendications 1 à 4, **caractérisée en ce que** les bras de blocage (40, 140) présentent chacun une ouverture de montage (45).

6. Ferrure à crans d'arrêt (10) selon l'une des revendications 1 à 5, **caractérisée en ce que** la surface périphérique extérieure (62) est pourvue localement d'une denture (111), la denture (111) étant de préférence apte à fixer par coopération de forces l'anneau de commande (60) sur la plaque de couverture (30).

7. Ferrure à crans d'arrêt (10) selon l'une des revendications 1 à 6, **caractérisée en ce que** la plaque de base (20) présente une paroi latérale annulaire qui est apte à refermer un intervalle entre la plaque de base (20) et la plaque de couverture (30), et/ou une première structure de renforcement (29a) qui rigidifie la plaque de base (30).

8. Ferrure à crans d'arrêt (10) selon l'une des revendications 1 à 6, **caractérisée en ce que** la plaque de couverture (30) présente une paroi latérale annulaire (32) qui est apte à refermer un intervalle entre la plaque de base (20) et la plaque de couverture (30), et/ou une seconde structure de renforcement (33) qui rigidifie la plaque de couverture (30).

9. Ferrure à crans d'arrêt (10) selon l'une des revendications 1 à 8, **caractérisée en ce que** le ressort (70) réalisé de préférence sous forme de ressort à lame ou de ressort hélicoïdal présente un premier embout (72) qui s'étend sensiblement parallèlement à l'axe radial (A), et un second embout (73) qui s'étend sensiblement orthogonalement à l'axe radial (A).

10. Ferrure à crans d'arrêt (10) selon l'une des revendications 1 à 9, **caractérisée en ce que** la plaque de base (20) et/ou la plaque de couverture (30) présente un logement (26) de réception du ressort (70) et/ou un évidement (27) destiné au premier embout (72) du ressort (70) et/ou une première ouverture (28) destinée à un levier d'actionnement (80).

11. Ferrure à crans d'arrêt (10) selon l'une des revendications 1 à 10, **caractérisée en ce que** la plaque d'actionnement (50) présente au moins une ouverture d'actionnement (51), en particulier deux ouvertures d'actionnement (51) pour faire tourner la plaque d'actionnement (50) et/ou en ce que la plaque d'actionnement (50) présente une ouverture à ressort (52) pour loger le second embout (73) du ressort (70) et/ou **en ce que** la plaque d'actionnement (50) présente une troisième ouverture (58) destinée à un levier d'actionnement (80).
